# EUROPEAN PATENT APPLICATION

(11) **EP 1 835 399 A2**
(43) Date of publication of application: **19.09.2007**
(21) Application number: 07001039.2
(22) Date of filing: 18.01.2007
(51) Int. Cl.: G06F 9/445, B60T 7/12, B60T 17/22

(54) **Brake control system architecture and method for updating firmware of embedded controller**

(30) Priority: 28.02.2006 JP 2006053034
(71) Applicant: HITACHI, LTD., Chiyoda-ku Tokyo 100-8280 (JP)
(72) Inventor: Kurisu, Kazuhiro, c/o Hitachi Ltd., 1-6-1 Marunouchi Chiyoda- Tokyo 100-8220 (JP); Kuragaki, Satoru, c/o Hitachi Ltd., 1-6-1 Marunouchi Chiyoda- Tokyo 100-8220 (JP)
(74) Representative: Beetz & Partner

(57) **Abstract**

The invention relates to a brake control system of a vehicle, a non-volatile memory of a micro controller mounted an a control apparatus can be rewritten data. The integrated control apparatus (102) and a plurality of control apparatuses, which control the brake apparatuses (103) to (106) correspondingly installed at each wheel, are connected via the network (117). The integrated control apparatus (102), in the case where a request to rewrite a program to a control apparatus is sent from the service terminal (110) which is connected via other networks (101), transmits an updated program sent from the service terminal (110), to a target control apparatus of the rewrite request via the network (117), after sending a brake command to make a vehicle stop. The control apparatus executes rewriting of a program stored in a non-volatile memory of the control apparatus has, by means of the updated program transmitted via the network (117).

## Description

### BACKGROUND OF THE INVENTION

The present invention relates to a control apparatus mounted on a vehicle or the like, and a method for rewriting a program thereof, in particular, relates to a brake control system for electrically controlling a brake apparatus of a vehicle or the like, and a method for rewriting a program thereof.

Recently, by factors such as advanced vehicular control and the like, a vehicle has been designed to mount a plurality of control apparatuses. Such a plurality of control apparatuses are mutually connected by one or a plurality of communication lines, and form a network in a vehicle to mutually exchange information.

A program of a control apparatus mounted on a vehicle may require rewriting aiming at enhancement or improvement of performance. As described above, rewriting of a program of a control apparatus connected with a network can be executed by connection of a service terminal exclusive to maintenance, with a communication line, from a service terminal, in a mounted state of each control apparatus onto a vehicle, to attain a single operability without depending on a control apparatus.

A control program which is written in each control apparatus is, in many cases, a program specific to a control apparatus. Therefore, in rewriting of only a program of certain one control apparatus in control apparatuses connected with such a network, it is necessary to take measures to prevent erroneous writing of a program to non-target control apparatuses of rewriting, along with to avoid disturbance in rewriting, by control apparatuses other than a rewriting target. In general, in an environment where a plurality of control apparatuses are connected on a communication line which is capable of exchanging multiplex communication, a certain form of mechanism to identify a control apparatus is incorporated. For example, there is a method for assuring writing of a program to a target control apparatus, by assigning a unique ID by each control apparatus, and writing a program by specifying an ID of a target control apparatus of rewriting, from a rewriting terminal. Such a technology is disclosed in, for example, JP-A-2003-172199.

### SUMMARY OF THE INVENTION

In particular, in a communication among control apparatuses requiring high precision control, traffic to be exchanged tends to increase, resulting in heavy load of a network. In such an environment, rewriting of a control program via network results in sending of a new control program to a target control unit of rewriting, by finding a small space in a jammed communication line, which could not only increase writing time but also affect writing reliability in no small way.

In the above case, traffic jam can be considered avoidable by the following methods: by using an exclusive communication line between control apparatuses requiring a large volume of mutual information exchange, and by forming a local network to realize the function attained by such control apparatuses; and in the case of connecting such control apparatuses with other control apparatuses, by connecting these via a network configured by a communication line different from the exclusive communication line.

However, in the case where requirements are present for a connecting cable to be as fine as possible, and the number of signal lines as less as possible, as in an electromotive brake actuator, setting of such a plurality of communication network lines is unadvisable.

On the other hand, there is a method for connecting control apparatuses themselves having strong relationship, by a sub-network, and to divide a total vehicular network. This method is capable of localizing information traffic jam, by assigning a role of a relay among other sub-networks to a specific control apparatus in each sub-network.

This method, however, is still not capable of solving the above-described problem, in the case of rewriting a program of a control apparatus belonging to such a sub-network with high load because of high information traffic, although smooth rewriting can be attained in a route with a relatively not-crowded communication line.

It is an object of the present invention to shorten time to write a program of a control apparatus connected with a network, without increasing the number of signal lines necessary to communication, and also to enhance reliability of writing a program.

To attain the above-described object, a brake control system according to the present invention is configured by comprising an integrated control apparatus; brake apparatuses each correspondingly installed at each wheel of a vehicle, and equipped with electromotive driving source, to provide braking force to a vehicle by utilization of driving force generated by said driving source; and/or a control apparatus, which has a rewritable non-volatile memory and controls the brake apparatus in accordance with a command from the integrated control apparatus, by means of executing a program memorized in the non-volatile memory. The integrated control apparatus and the plurality of control apparatuses are connected via a first network.

The integrated control apparatus, in the case where a request to rewrite a program is sent from a service terminal which is connected with the integrated control apparatus, to any of the plurality of control apparatuses, transmits an updated program sent from the service terminal, to a target control apparatus of the rewrite request, via the first network, after sending a brake command to make a vehicle in a stop state, to each control apparatus. Then, the target control apparatus of the rewrite request executes rewriting of a program memorized in the non-volatile memory which the own control apparatus has, in accordance with the updated program transmitted via the first network.

In a preferred embodiment of the present invention, a brake command is one for commanding an actuation of a parking brake mechanism to maintain braking force by a brake apparatus without power supply to a drive source. The integrated control apparatus sends a brake command, and transmits an updated program which is sent from a service terminal, to the first network, after the parking brake mechanism is actuated, and thus rewriting of a program at a target control apparatus of rewriting is executed. The integrated control apparatus and the service terminal are mutually connected via a second network different from the first network.

More preferably, power supply to other control apparatuses excluding the target control apparatus of rewriting is blocked under control of the integrated control apparatus, after actuation of said parking brake mechanism. In addition, the service terminal and the integrated control apparatus are connected via the second network different from the first network.

According to other embodiment of the present invention, the brake control system has an integrated control apparatus; brake apparatuses each correspondingly installed of each wheel of a vehicle to provide braking force; and/or a control apparatus, which has the rewritable non-volatile memory and controls the brake apparatus in accordance with a command from the integrated control apparatus, by means of executing a program memorized in the non-volatile memory. The integrated control apparatus and each control apparatus are connected via the first network.

The integrated control apparatus, in the case where a request to rewrite a program is sent from a service terminal which is connected with the integrated control apparatus, to any of the plurality of control apparatuses, transmits an updated program sent from the service terminal, to a target control apparatus of the rewrite request, via the first network, after blocking power supply to the plurality of control apparatuses excluding a target control apparatus of the rewrite request. Then, the target control apparatus of the rewrite request receives the updated program transmitted via the first network, and rewrites a program memorized in the non-volatile memory which the own control apparatus has.

Time required to write a program of a control apparatus connected to a network can be shortened without increasing the number of signal lines necessary in communication, and also reliability of writing a program can be enhanced.

The above features can be combined in any way partly or as a whole.

Other objects, features and advantages of the invention will become apparent from the following description of the embodiments of the invention taken in conjunction with the accompanying drawings.

### BRIEF DESCRIPTION OF THE DRAWINGS

FIG. 1 is a block diagram showing a configuration of an electromotive brake system relevant to an embodiment of the present invention.
FIG. 2 is a simplified structure diagram showing inside structure of an electromotive brake actuator.
FIG. 3 is a message format showing configuration of a communication message.
FIG. 4 is a simplified appearance diagram of a service terminal.
FIG. 5 is a rewrite Operation screen view of a service terminal.
FIG. 6 is a memory map for explaining configuration of rewritable non-volatile memory.
FIG. 7 is a flow Chart of rewrite processing by a service terminal.
FIG. 8 is a control flow chart of a parking brake control executed by an integrated control apparatus in rewriting a control program.
FIG. 9 is a control flow chart of a parking brake control executed by an electromotive brake actuator in rewriting a control program.
FIG. 10 is a flow chart of rewrite processing of a control program by an electromotive brake actuator.
FIG. 11 is a flow chart of rewrite processing to a second micro controller.

### DESCRIPTION OF THE EMBODIMENTS

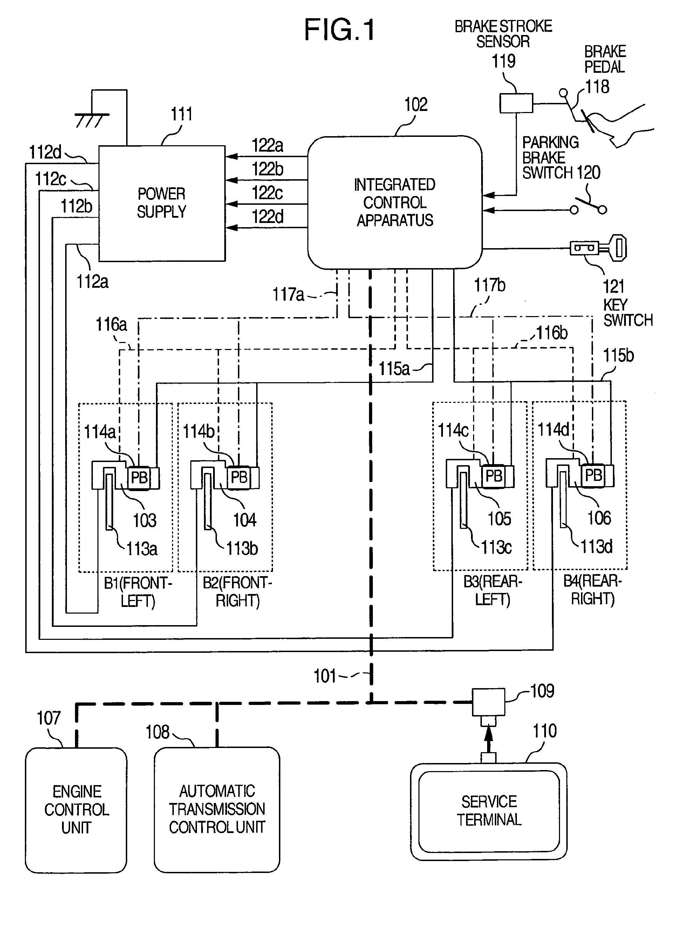

FIG. 1 is a schematic diagram showing an embodiment of a vehicle mounted with an electromotive brake system wherein the present invention is applied.

The electromotive brake units B1 to B4 of each wheel are equipped with the elements 113a to 113d to be subjected to braking, which rotate integrated with each wheel, brake elements, not shown, installed at the electromotive brakes, and the electromotive brake actuators 103 to 106 which press these brake elements to the elements 113a to 113d to be subjected to braking, by motor force. The elements 113a to 113d to be subjected to braking are so-called brake disks or brake drums, and the brake elements are so-called brake pads.

As the electromotive brake actuators 103 to 106, those described, for example, by JP-A-2002-213507, may be used. In addition, the electromotive brake actuators are not especially limited to have specific structure, and those electromotive brake actuators having various structures may be used.

In FIG. 1, the integrated control apparatus 102 is connected with the electromotive brake actuators 103 and 104 arranged at a front wheel, via the first sub-network 115a to attain load dispersion and to make a double brake function, and connected with the electromotive brake actuators 105 and 106 arranged at a rear wheel, via the second sub-network 115b. The first sub-network 115a and the second sub-network 115b configure an each independent sub-network. In addition, the first sub-network 115a and the second sub-network 115b are bus type networks which are capable of a multiplex communication.

The signal lines 116a to 116d transmit drive force or current value of the electromotive brake actuators 103 to 106, to the integrated control apparatus 102. The power lines 112a to 112d supply power to the electromotive brake actuators 103 to 106.

The integrated control apparatus 102 is connected also with the main network 101 to communicate with other control apparatuses in a vehicle. As these other control apparatuses, for example, the engine control unit 107 or the automatic transmission control (hereafter referred to as AT) unit 108, or the like is included. The integrated control apparatus 102 exchanges information with these other control apparatuses to provide advanced vehicular control. The main network 101 is also connected with a plurality of control apparatuses similarly as the first sub-network 115a and the second sub-network 115b, and is a bus type network which is capable of a multiplex communication.

The main network 101 is equipped with the maintenance port 109 for diagnosis of components such as control apparatuses or the electromotive brake actuators mounted on a vehicle, in carrying out maintenance at a service shop. To the maintenance port 109, the service terminal 110 may be connected. To components relevant to the present embodiment, namely the integrated control apparatus 102, the electromotive brake actuators 103 to 106, the engine control unit 107 and the AT control unit 108, identifies are assigned, which are singly identifiable these components in a vehicle. Therefore, by carrying out diagnosis software built-in at each component or present in the service terminal 110, the state of each component can be observed in a mounted state in a vehicle without exchanging wirings.

To the electromotive brake units B1 to B4, power is supplied from the power supply 111 via the power lines 112a to 112d. Specifically, a power control signal is sent from the integrated control apparatus 102 to the power supply 111 via the power control signal lines 122a to 122d, and power is supplied from the power supply 111 to each unit, in accordance with the power control signal. In this case, power may be designed to be supplied to the electromotive brake unit B1 of a left front wheel, and the electromotive brake unit B4 of a right rear wheel as a set, or power may be supplied to the electromotive brake unit B2 of a right front wheel and the electromotive brake unit B3 of a left rear wheel as a set.

In addition, the electromotive brake system of the present embodiment is equipped with a parking function. To the integrated control apparatus 102, a signal is designed to be input from the parking brake switch 120. To the electromotive brake units B1 to B4 of each wheel, the parking mechanism parts 114a to 114d are installed. The parking mechanism parts 114a to 114d are mechanism for moving brake pads, or for regulating action of the electromotive brake actuators 103 to 106, in accordance with a command from the integrated control apparatus 102, and are configured so as to maintain braking force (pushing force of braking elements to the element 113 to be subjected to braking), even when current application is stopped to the electromotive brake actuators 103 to 106.

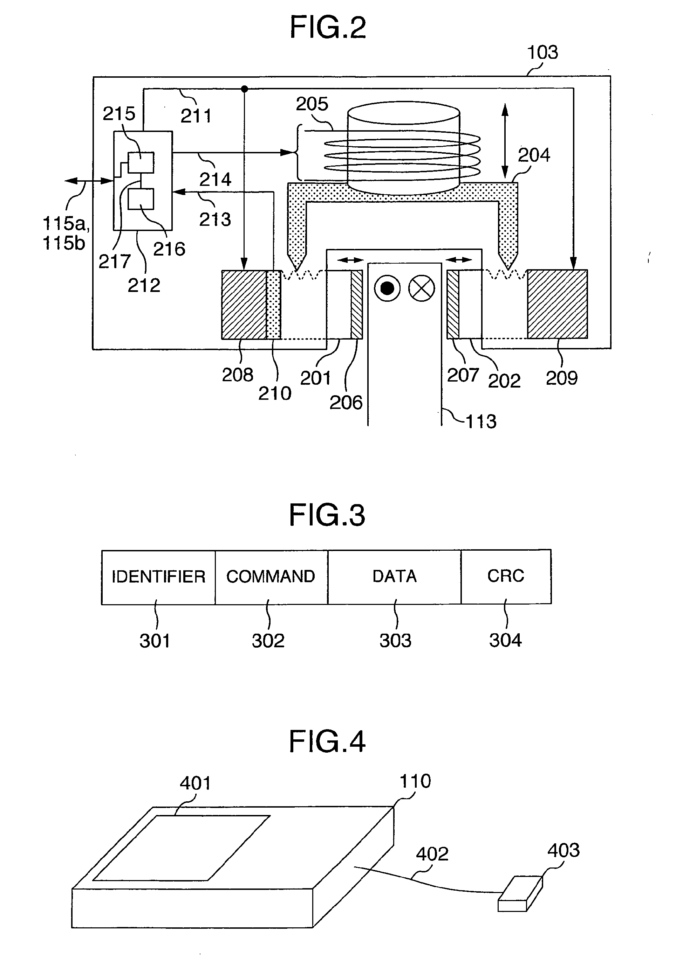

FIG. 2 is a simplified configuration diagram showing inside structure of the electromotive brake actuators 103 to 106. The other electromotive brake units B2 to B4 are similarly configured. The brake force sources 208 and 209 are configured so as to include, for example, a motor and a D.C./A.C. conversion mechanism, to actuate reciprocal motion of the pistons 201 and 202, and to make contact of the brake elements 206 and 207 to elements 203 to be subjected to braking. The pushing pressure detecting unit 210 measures braking force generated by the pistons 201 and 202. The control unit 212 monitors the braking force signal 213 measured by the pushing pressure detecting unit 210, and drives the braking force source via the driving line 211, in accordance with pushing force value of a command received from the first or the second sub-network, 115a or 115b, and thus controls braking force.

The control unit 212 drives the brake force sources 208 and 209 till specified braking force is attained, in the case of maintaining braking force. At the timing when the pushing pressure detecting unit 210 detects that specified braking force is attained, the control unit 212 controls current application to the solenoids 205, and moves the plunger 204 downward so as to make the plunger intermeshed into grooves of the pistons 201 and 202. Such a mechanism is capable of maintaining braking force without continuously providing piston energy by hydraulic force or electromotive force. It should be noted that a move direction of a braking force maintaining apparatus is not especially limited thereto, and may be determined depending on the brake apparatus. In addition, the control unit 212 may be present exterior of the electromotive brake actuator 7, for example, inside a vehicle room.

The control unit 212 equipped by the electromotive brake actuators 103 to 106 has two micro controllers inside. The first micro controller 215 is connected with the first sub-network 115a or the second sub-network 115b, which is a communication path with the integrated control apparatus 102. On the other hand, the second micro controller 216 is connected with the first micro controller 215 via the inner communication path 217, which is a bi-directional communication path capable of sending arbitrary data, however, does not have a communication path with exterior parts.

FIG. 3 is a format diagram for explaining message configuration of a communication from the service terminal 110.

The service terminal 110 sends the message 300 to the main network 101, in communication with each component that is connected with a network.

The message 300 is configured by comprising at least the identifier field 301 for specifying a diagnosis target component, the command field 302 for showing processing content required to the diagnosis target component, and the data field 303 with a finite size for storing parameters necessary for processing shown by the command field 302. In the present embodiment, communication reliability is enhanced by the addition of the CRC field 304 where cyclic redundancy check code for error detection is set, in addition to these three fields.

When the message 300 is sent from the service terminal 110 which is connected to the maintenance port 109, a component specified by the identifier field 301 receives the message 300. The component which received the message 300 executes a processing in response to the content of the command field 302, and sends the results of the processing to the service terminal 110.

The above-described processing enables an operator to make diagnosis of the integrated control apparatus 102 or the engine control unit 107, and the AT control unit 108, connected to the main network 101, from the service terminal 110, all by a similar operation.

The integrated control apparatus 102 sends a power control signal to the power control signal lines 122a to 122d to control the power supply 111. The power supply 111 then supplies power to the electromotive brake actuators 103 to 106 via the power lines 112a, 112b, 112c and 112d, in accordance with the power control signal sent. In this way, the integrated control apparatus 102 is capable of arbitrarily control power supply to each of the electromotive brake actuators 103 to 106. In normal operation, power is always supplied to the electromotive brake actuators 103 to 106.

The electromotive brake actuators 103 to 106 execute a specified start-up sequence when power is on, and then starts communication with the integrated control apparatus 102. The electromotive brake actuators 103 to 106 and the integrated control apparatus 102 periodically communicate in a specified frequency to transmit a braking operation of a driver without delay, and thus never stop communication unless power is blocked.

In addition, in FIG. 1, the integrated control apparatus 102 is provided with a message relaying function so as to make access also to the electromotive brake actuators 103 to 106, similarly as other components which are connected from the service terminal 110 to the main network 101. Also to the electromotive brake actuators 103 to 106, identifiers, which are capable of independent specification in a vehicle, are also assigned, similarly as other components connected to the main network 101.

The integrated control apparatus 102 maintains a component connected with the first sub-network 115a and the second sub-network 115b, namely an identifier table of the electromotive brake actuators 103 to 106. The integrated control apparatus 102, when a message to the electromotive brake actuators 103 to 106 is detected in messages sent from the service terminal 110 to the main network 101, transmits the message toward any of the first sub-network 115a and the second sub-network 115b, to which the electromotive brake actuator shown by the identifier belongs.

The electromotive brake actuator received a command from the service terminal 110 sends a response message, wherein an identifier responding to the service terminal 110 is recorded in the identifier field, toward a sub-network to which the actuator itself belongs. The integrated control apparatus 102, when the message to the service terminal 110 flowing on the first sub-network 115a and the second sub-network 115b is detected, transmits the message to the main network 101. This transmission makes possible for the service terminal 110 to execute similar diagnosis also to the electromotive brake actuators 103 to 106 connected with the first sub-network 115a and the second sub-network 115b, similarly as in other control apparatuses connected with the main network 101.

The service terminal 110 is capable of executing rewriting of a program recorded in a rewritable non-volatile memory of a micro controller in the component, using the message of FIG. 3, in addition to diagnosis of a component.

The service terminal 110 has appearance as shown, for example, in FIG. 4, and displays information of the component at the display unit 401. An operator connects the connector 403 of the service terminal with the maintenance port 109, in making a diagnosis of a vehicular component, and thereby the electric wire 402 of the service terminal and the main network 101 are connected.

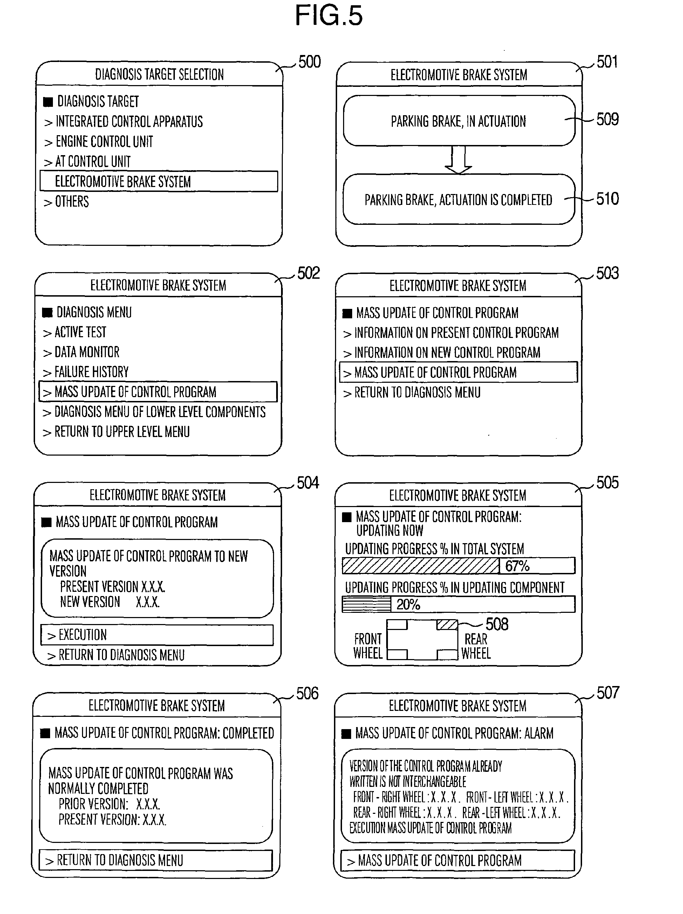

For example, in executing diagnosis of the electromotive brake system as a target, the diagnosis screens 500 to 507 shown by FIG. 5 are displayed at the display unit 401. The diagnosis target selection screen 500 is an initial screen of the display unit 401, and an operator selects a diagnosis target from a plurality of control apparatuses displayed at the display unit 401. A case of selecting the electromotive brake system as a target is explained below.

The parking brake actuation screen 501 is a display screen to notice an operator that the parking brake functions 114a to 114d of the electromotive brake actuator is in the midst of actuation or in completion of the actuation. Here, in the case where the parking brake functions 114a to 114d are in the midst of actuation, "parking brake is in actuation" is displayed, and in the case where the service terminal 110 received a message of "completion of a parking brake actuation" from the integrated control apparatus 102, "parking brake actuation is completed" is displayed. Note that a unit to stop a vehicle is not limited to the parking brake functions 114a to 114d, and any unit may be adopted as long as being capable of safely stop or immobilize a vehicle.

After actuation completion of the parking brake functions 114a to 114d, the diagnosis menu screen 502 is displayed. Here, when an operator selects mass update of the control program, the mass update screen 503 of the control program is displayed.

The version display screen 504 of the updating control program displays information on the present and new versions of the control program, so that an operator can confirm them.

The mass update screen 505 of the control program displays a progress state of updating. Here, as the wheel display 507, such a display may be designed: "A control program of an electromotive brake unit at which wheel of a vehicle is now in the midst of updating".

The mass update completion screen 506 of the control program displays present and new versions for re-confirmation. The mass update alarm screen 507 of the control program is displayed in the case where the version of the control program already written is not interchangeable. In this case, a version of the control program of the electromotive brake unit installed at four wheels is shown for an operator to be able to confirm.

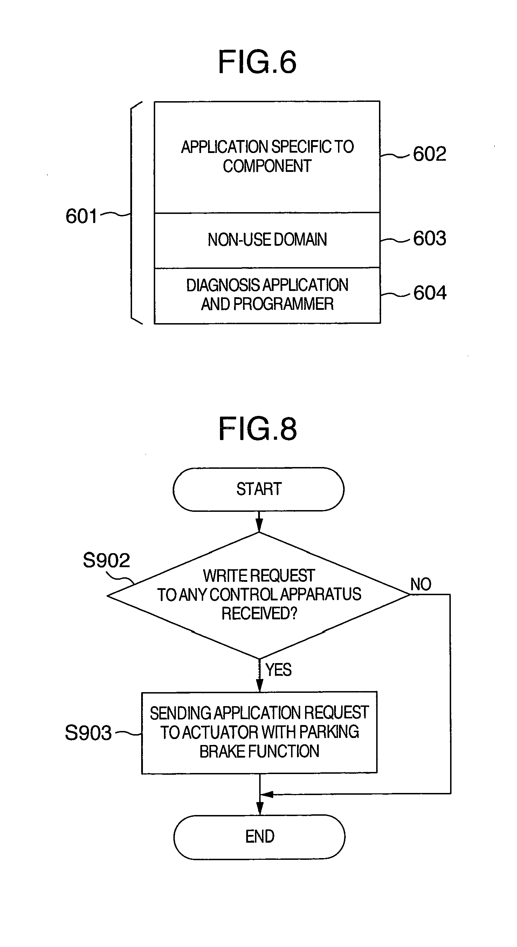

FIG. 6 is a memory map of a non-volatile memory of a component on which a micro controller responsive to program rewriting is mounted. In the non-volatile memory domain 601, the control program 602 specific to a component, executed by a micro controller in normal use, and the diagnosis application and rewriting program 604 for rewriting a rewritable non-volatile memory are stored, and there is the non-used domain 603 in a part.

The integrated control apparatus 102 and the electromotive brake actuators 103 to 106 in the present embodiment are also mounted with a micro controller equipped with a rewritable non-volatile memory, and the non-volatile memory domain has a similar domain as a memory map shown in FIG. 6.

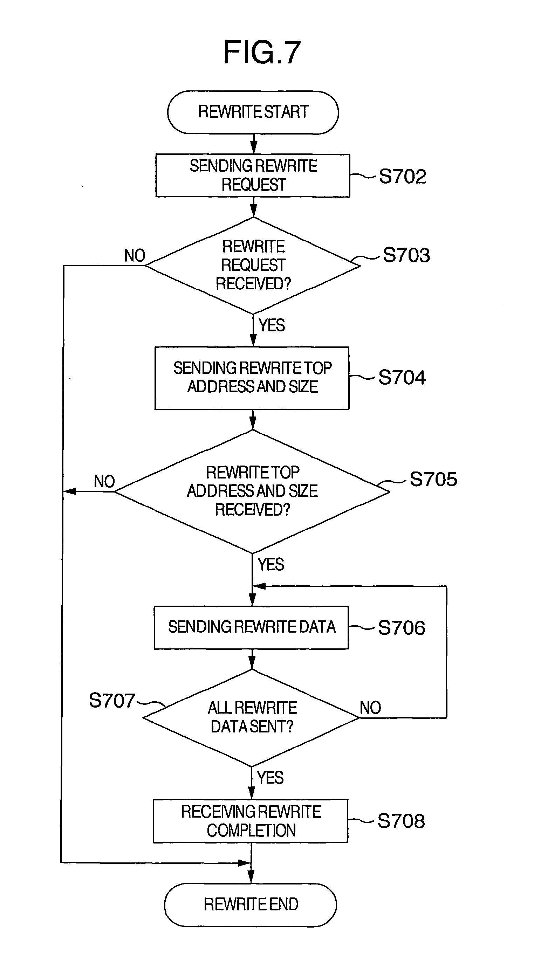

FIG. 7 is a flow chart showing rewrite procedure of a non-volatile memory of a component, by the service terminal 110.

In the start of rewriting, the service terminal 110 sends a rewrite request to a target component of rewriting (the step 702); subsequently, the target component, when the rewriting request is received, sends the first receipt signal to the service terminal 110. When the service terminal 110 receives the first receipt signal (the step 703), the step proceeds to the step 704, while the receipt signal cannot be received within a specified period, the processing is terminated.

In the step 704, the service terminal 110 adds the top address and new program data size of the control program, which is a rewrite target and stored in a non-volatile memory of a rewrite target component, and sends them to the rewrite target component.

When the rewrite target component receives the above-described address and data size, the second receipt signal is sent to the service terminal 110. When the service terminal 110 receives the second receipt signal (the step 705), the step proceeds to the step 706, while the second receipt signal cannot be received within a specified period, the processing is terminated.

Then, the service terminal 110 sends the message 300 stored with a program for new rewrite, in the data field 303, to the rewrite target component (the step 706). Then, when sending of all pieces of the data of a new program is completed, the step proceeds to the step 708, while when the transmission is not yet completed, the step proceeds to the step 706 (the step 707). Finally, when "completion of the rewrite processing" is received from a rewrite target component (the step 708), the rewrite processing is completed (the step 709).

In general, the size of a program stored in a non-volatile memory of a micro controller is as large as several 10 k (kiro) bytes to several 100 k bytes, although it depends on an application. On the other hand, the data size, which can be sent once by an information form as shown in FIG. 3, is several bytes at the highest. Therefore, sending a whole new program in a message form as shown in FIG. 3 requires very large quantity of message communications. On the other hand, high response condition is required between the electromotive brake actuators 103 to 106 and the integrated control apparatus 102, in view of nature of control thereof. Therefore, very frequent information exchange is executed between the first sub-network 115a and the second sub-network 115b connecting these, which increases network load. Therefore, execution of rewriting of a program of the front-left electromotive brake actuator 103 from the service terminal 110 requires sending of many messages to transmit a new program, in a network with high load, which in turn requires much time till the writing is completed.

In view of the above problem, the integrated control apparatus 102 relevant to the present embodiment, in the case of relaying a rewrite request message sent from the service terminal 110 in the step 702, blocks power supply to the electromotive brake actuator other than a rewrite target connected with the same sub-network, by the power management function. By this function, rewrite period can be shortened, because a sub-network can be occupied for communication between the integrated control apparatus 102 and the rewrite target electromotive brake actuator.

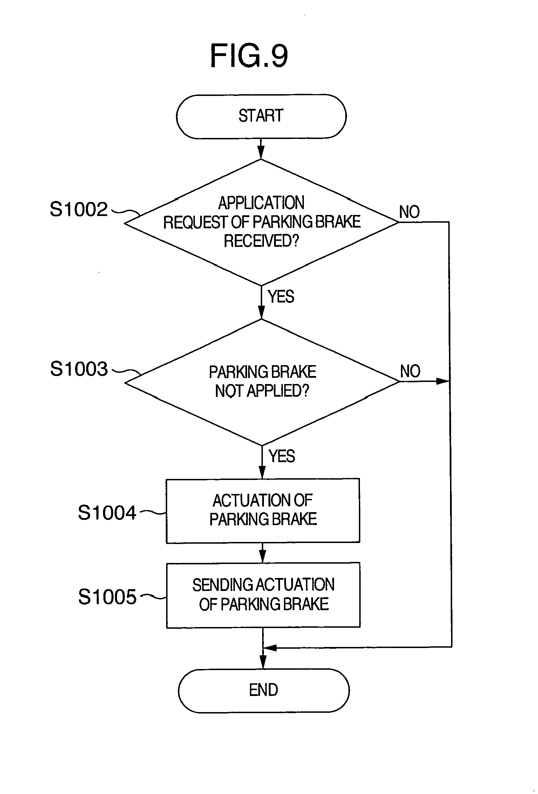

Furthermore, the integrated control apparatus 102, when the rewrite request message is detected to any of a component including the integrated control apparatus 102 itself, has a function to compulsorily stop a vehicle so as not to start to move during rewriting, by actuation of the electromotive parking brake function. This function is explained using FIG. 8 and FIG. 9.

The integrated control apparatus 102 always monitors a message sent from the service network 110 via the main network 101, and executes a processing as shown in FIG. 8. This processing inspects whether or not a message received is a rewrite request to any component (the step 902). The message is sent in a format as shown in FIG. 3, and can be judged whether or not the message is the rewrite request, by inspection of the command field 302. In the case of being the rewrite request, the step 903 is executed, while in the case of being other than the rewrite request, the processing is terminated. The step 903 sends an application request of parking brake to the electromotive brake actuators 103 to 106 via the sub-networks 115a and 115b, as well as sends a power control signal to supply drive power of parking brake from the power supply 111 via the power control signal lines 122a to 112d.

On the other hand, the electromotive brake actuators 103 to 106 always monitor a message from the integrated control apparatus 102, and execute a processing as shown in FIG. 9. When the electromotive brake actuators 103 to 106 receive the message from the integrated control apparatus 102, whether or not the message is the application request of a parking brake is judged in the step 1002; in the case where the message is the application request of the parking brake, the step 1003 is executed, while in the case where the message is not so, the processing is completed. The step 1003 judges whether or not the parking brake is already applied, and in the case of "being applied already", the processing is completed, while in the case of "being not applied yet", the step proceeds to the step 1004. The step 1004 applies the parking brake and then completes the step. In addition, the step 1005 sends a message of "the parking brake was applied" to the integrated control apparatus 102.

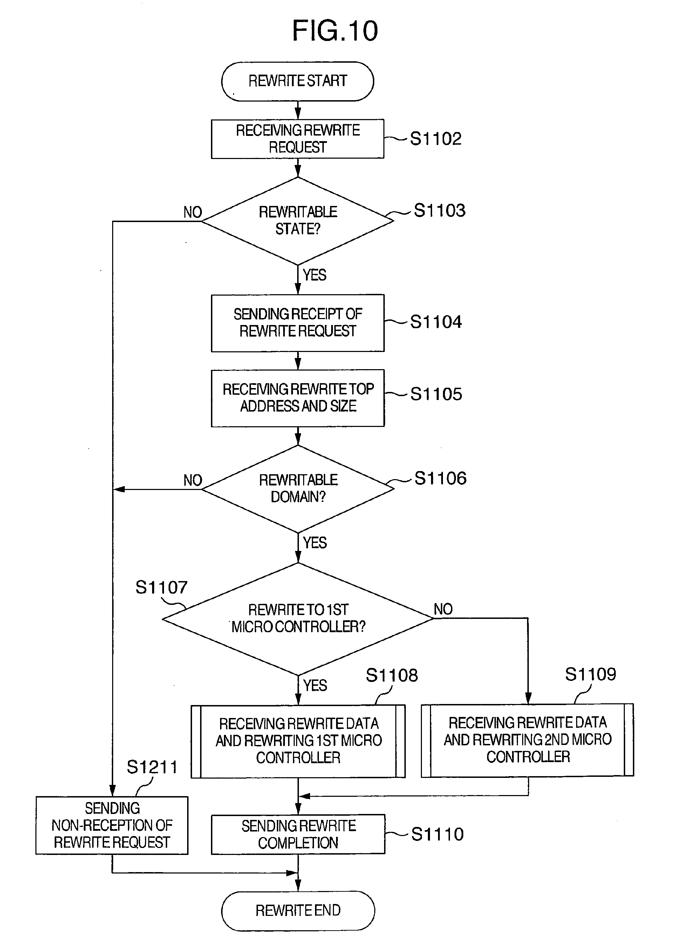

FIG. 10 is a flow chart of rewriting processing of the control program by the electromotive brake actuators 103 to 106. As described above, the electromotive brake actuators 103 to 106 have two micro controllers in the control unit 212. A message which is transmitted on a sub-network is received by the first micro controller 215. Among data included in the message received, data to be processed by the second micro controller 216 is received by the first micro processor 215, and then transmitted to the second micro processor 216. Therefore, data to be written into the non-volatile memory which the second micro processor 216 has is also sent to the second micro processor 216 via the first micro processor 215.

It should be noted here that a rewritable non-volatile memory of the first micro processor 215 has a size of 64 k bytes, and is assigned to have an address range of 0 to 65535 block numbers; in addition, the rewritable non-volatile memory of the second micro processor 216 has a size of 32 k bytes, and is assigned to have an address range of 65534 to 98303 block numbers.

The first micro processor 215, when it receives a rewrite request of a non-volatile memory from the service terminal 110 (the step 1102), judges whether or not a control state is rewritable (the step 1103), and in the case of being judged rewritable, the step proceeds to the step 1104, while in the case of being judged not rewritable, the step proceeds to the step 1211. Here, as a specific example of the case where the first micro controller 215 is a control state of being not rewritable, the following control cases are included: start and completion processing of a control circuit, pushing force control to push a brake pad against a rotor, clearance control to adjust clearance between the brake pad and the rotor, start and completion processing of the parking brake mechanism, and further fail safe control such as compulsory release of pushing force in the case of failure of an electromotive brake apparatus, and the like

The electromotive brake actuators 103 to 106, when they receive a rewrite request in the step 1105, judge whether or not the program sent is writable in the non-volatile memory domain which can be used for the control program, based on the rewrite top address and the program size specified by the rewrite request received. When the program sent is judged out of the domain of the non-volatile memory which can be used for the control program and thus not rewritable, the first micro controller 215 proceeds to the processing of the step 1211 (the step 1160).

In the step 1107, the first micro controller 215 judges whether the request is for rewrite to the first micro controller 215 or to the second micro controller 216, based on the rewrite top address specified by the rewrite request. Specifically, in the case where the rewriting top address is 0 to 65535 block number, it is judged being rewrite to the first micro controller 215, while in the case where the rewriting top address is 65534 to 98303 block number, it is judged being rewrite to the second micro controller 216. When the rewrite target is the first micro controller 215, the step proceeds to the step 1108, while when the rewrite target is the second micro controller 216, the step proceeds to the step 1109.

In the step 1108, the first micro controller 215 receives a message sequentially sent from the service terminal 110, and writes data in the message received into the non-volatile memory inside the first micro controller 215. The first micro controller 215, after writing the data with a specified program size into the non-volatile memory, proceeds to a processing of the step 1110.

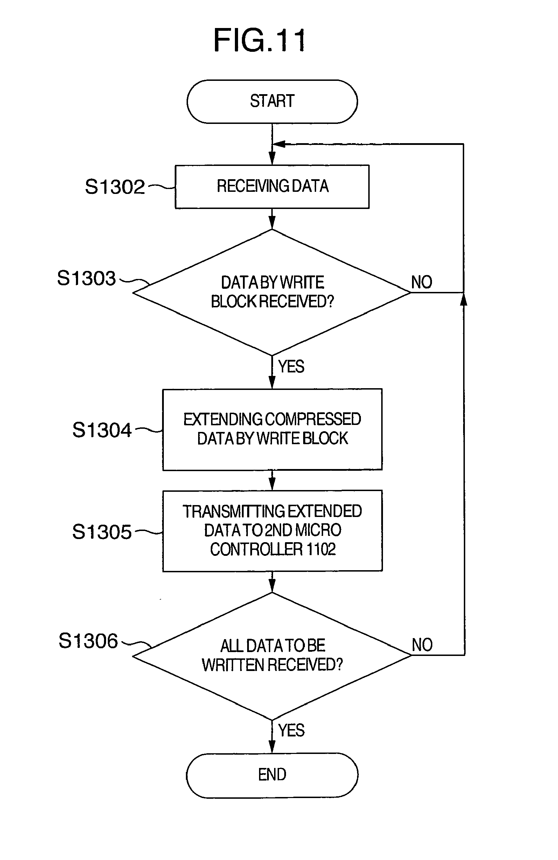

In the step 1109, the first micro controller 215 transmits data in a message sequentially sent to the second micro controller 216, and writes in the non-volatile memory inside the second micro controller 216. FIG. 11 shows more specific processing flow of the step 1109. Note that, in the present embodiment, a program of the second micro controller 216 is sent in a compressed state by each specified writing block size from the service terminal 110 to increase transmission speed.

The first micro controller 215 receives a message including data written into the second micro controller 216, from the service terminal 110 (the step 1302). Data in the message received is temporarily stored at a work domain secured at a part of the non-volatile memory which the first micro controller 215 has. The first micro controller 215 checks whether or not data compressed in a corresponding specified writing block size is accumulated at the work domain, and when the data compressed in a corresponding specified writing block size is accumulated, the step proceeds to a processing of the step 1304, while not accumulated, the step returns to the step 1302, and a message subsequently sent is received. In the step 1304, the first micro controller 215 develops the data accumulated in the work domain. The first micro controller 215 transmits the developed data with a specified writing block size to the second micro controller 216. The second micro controller 216 then stores the data transmitted from the first micro controller 215 in the own non-volatile memory (the step 1305). The first micro controller 215, when it receives all of the written data sent from the service terminal 110, and completes writing thereof into the non-volatile memory of the second micro controller 216, proceeds to a processing of the step 1110.

In the step 1110, the first micro controller 215 notifies completion of writing, to the service terminal 110 and terminates the processing.

On the other hand, in the case where rewriting of the control program is judged impossible in the step 1103 or 1106, the first micro controller 215 sends a message of non-receipt of a rewrite request to the service terminal 110.

According to the embodiment as explained above, usually in rewriting of the control program of the electromotive brake actuator connected with a sub-network having high load, by mutual message exchange in high frequency, message sending from the non-rewrite target electromotive brake actuator is suppressed, and thereby increase in writing time can be suppressed, because the sub-network can be occupied for rewriting, which in turn can improve reliability of program rewriting.

Furthermore, in program rewriting, a processing is executed by making a vehicle in an immovable state, in advance, by a parking brake, therefore it is hardly likely of an unexpected accident by moving of a vehicle during rewriting the program, in the case where the electromotive brake actuator cannot execute usual braking control, by which vehicular maintenance can safely be executed.

In the above-described embodiment, only a message on the sub-network, with which the electromotive brake actuator is connected, is suppressed, however, by reducing or suppressing frequency of message sending from each control apparatus except the integral control apparatus connected with the main network 101, in rewriting the program of the electromotive brake actuator, so as to make possible preferential use of the main network for program rewriting of the electromotive brake actuator, work time can further be shortened.

Specifically, each of the control apparatus connected with the main network monitors the message flowing on the main network, and when it detects rewrite message to other components, message sending to the main network is suppressed or blocked. Then, when writing the program to the corresponding component is completed, and writing completion notice is detected, each control apparatus may be designed to release the suppression state of the message sending, or resume the message sending.

In addition, in rewriting the program of the control apparatus connected with the main network, by controlling the electromotive brake actuator under control from the integrated control apparatus, and by maintaining a vehicle in an immovable state by actuating a usual brake or the parking brake mechanism, rewriting work of the program of the control apparatus can be executed in a more safety state, similarly as in the case of the above-described rewriting of the control program of the electromotive brake actuator. Specifically, the integrated control apparatus, when it detects the rewrite request message to the control apparatus connected with the main network, commands to the electromotive brake actuators to generate braking force so as to actuate a brake by specified force, or commands actuation of the parking brake mechanism. Each of the electromotive brake actuators actuates braking force or the parking brake mechanism according to this command.

Furthermore, in the above-described embodiment, by controlling power of each electromotive brake actuator by the integrated control apparatus, in rewriting the program of the electromotive brake actuators, the sub-network is made preferentially be used for transmitting the message for program rewriting, however, instead of this method, each electromotive brake actuator may be designed to suppress communication frequency with the integrated control apparatus, during the rewriting period of the program of other electromotive brake actuators. For example, by configuring communication with the integrated control apparatus usually in a frequency of 2 ms to change to a frequency of 200 ms during parking brake actuation, communication frequency can be suppressed. In such a way, also by suppressing communication frequency of the electromotive brake actuators which are actuating the parking brake mechanism, shortening of writing time to the rewriting target electromotive brake actuator and improvement of writing reliability can be attained.

It should be further understood by those skilled in the art that although the foregoing description has been made an embodiments of the invention, the invention is not limited thereto and various changes and modifications may be made without departing from the spirit of the invention and the scope of the appended claims.

The above features and embodiments may be combined in any way partly or as a whole.

## Claims

1. A method for updating a program in a brake control system which is equipped with:
an integrated control apparatus (102);
a plurality of brake apparatuses which is correspondingly mounted to each wheel of a vehicle and actuates brake to a vehicle;
a plurality of control apparatuses which are correspondingly mounted to said plurality of brake apparatuses, and control said each responding brake apparatus, in accordance with a command from said integrated control apparatus (102), by executing a program memorized in an embedded rewritable nonvolatile memory; and
a network which exchanges a message between said integrated control apparatus (102) and said plurality of brake apparatuses, said method comprising the steps of:
receiving a rewrite request message to request rewrite of a program to a first control apparatus included in said control apparatus, from a service terminal (110) connected with said integrated control apparatus (102), by said integrated control apparatus (102);
sending a command so as to actuate said brake apparatus from said integrated control apparatus (102) to at least one control apparatus in said plurality of control apparatuses in response to said rewrite request message;
providing braking force to a vehicle, in response to said command, by said at least one control apparatus, by means of controlling said brake system where said at least one control apparatus is correspondingly mounted; and
executing rewriting of a program, which program is stored in said rewritable non-volatile memory installed at said first control apparatus, by receiving from said service terminal (110) a program to be wrote into said first control apparatus, by said integrated control apparatus (102), after said command is sent, and by transmitting said program to said first control apparatus via said network.

2. The method for updating a program according to claim 1, wherein
the step of actuating said braking force comprises the step of actuating a parking brake function provided in a brake apparatus correspondingly installed at said at least one control apparatus.

3. The method for updating a program according to claim 1 or 2, wherein
the step of providing said braking force comprises step of shifting said plurality of control apparatuses excluding said first control apparatus, to a reduced state of communication frequency with said integrated control apparatus (102).

4. The method for updating a program according to at least one of claims 1 to 3, wherein
said step of shifting further comprises: step of
transmitting said rewrite request message from said integrated control apparatus (102) onto said network;
step of detecting said rewrite request message transmitted onto said network, by said plurality of control apparatuses excluding said first control apparatus; and
step of reducing sending messages to said network, in response to detection of said rewrite request message.

5. The method for updating a program according to at least one of claims 1 to 4, wherein, when said program rewriting is completed:
sending a rewriting completion message showing completion of said program rewriting, from said first control apparatus to said integrated control apparatus (102) via said network, when said program rewriting is completed;
detecting said completion message, which is transmitted onto said network, in each of said plurality of control apparatuses excluding said first control apparatus; and
restoring a state from a state of reduced communication frequency in response to detection of said completion message.

6. The method for updating a program according to at least one of claims 1 to 5, wherein
said step of shifting comprises step of blocking power supply to said plurality of control apparatuses excluding said first control apparatus, by said integrated control apparatus (102).

7. A brake control system comprising:
an integrated control apparatus (102);
a first network, with which said integrated control apparatus (102) is connected;
brake apparatuses each installed at each wheel of a vehicle, and equipped with electromotive driving source, to provide braking force to a vehicle by utilization of driving force generated by said driving source; and
a control apparatus, which is connected to said first network and has a rewritable non-volatile memory, to control said brake apparatus in accordance with a command from said integrated control apparatus (102), by means of executing a program memorized in said non-volatile memory, wherein
said integrated control apparatus (102), in the case where a request to rewrite a program is sent from a service terminal (110) connected with said integrated control apparatus (102), to any of said plurality of control apparatuses, sends a brake command so as to make a vehicle in a stop state, to at least one control apparatus in said plurality of control apparatuses, and then transmits an updated program sent from said service terminal (110), to a target control apparatus of said rewrite request, via said first network; and
the target control apparatus of said rewrite request executes rewriting of a program memorized in said non-volatile memory which the own control apparatus has, by means of said updated program transmitted via said first network.

8. The brake control system according to claim 7, wherein:
a brake apparatus responding to said of least one control apparatus in said plurality of control apparatuses, is equipped with a parking brake mechanism to maintain braking force generated, even after power supply to said drive source is stopped; and
said brake command is a command to actuate said parking brake mechanism.

9. The brake control system according to claim 7 or 8, wherein
said integrated control apparatus (102), after sending said brake command, blocks power supply to said plurality of control apparatuses excluding a target control apparatus of said rewrite request, before transmitting said update command.

10. The brake control system according to at least one of claims 7 to 9, wherein
said plurality of control apparatuses drive said drive source in response to said brake command, control said brake apparatus so as to generate braking force by said parking brake mechanism, and also reduce communication frequency with said integrated control apparatus (102), via said first network.

11. A brake control system comprising:
an integrated control apparatus (102);
a first network with which said integrated control apparatus (102) is connected;
brake apparatuses each correspondingly installed at each wheel of a vehicle, and equipped with electromotive driving source, to provide braking force to a vehicle by utilization of driving force generated by said driving source; and
a control apparatus, which is connected with said first network, has a rewritable non-volatile memory and controls said brake apparatus in accordance with a command from said integrated control apparatus (102), by means of executing a program memorized in said non-volatile memory, wherein
said integrated control apparatus (102), in the case where a request to rewrite a program is sent from a service terminal (110) which is connected with said integrated control apparatus (102), to any of said plurality of control apparatuses, transmits an updated program sent from said service terminal (110) to a target control apparatus of said rewrite request via said first network, after blocking power supply to said plurality of control apparatuses excluding a target control apparatus of said rewrite request; and
the target control apparatus of said rewrite request executes rewriting of a program memorized in said non-volatile memory which said own control apparatus has, in accordance with said updated program transmitted via said first network.

12. The brake control system according to claim 11, further comprising a second network different from said first network, wherein said integrated control apparatus (102) is connected with said service terminal (110) via said second network.

13. The brake control system according to claim 11 or 12, wherein
said integrated control apparatus (102), in advance to said blocking of power supply, sends a brake command to make a vehicle in a stop state, to at least one control apparatus in said plurality of control apparatuses; and
said at least one control apparatus generates braking force by controlling corresponding said brake apparatus, in response to said brake command.

14. The brake control system according to at least one of claims 11 to 13, wherein
the brake apparatus responding to said at least one control apparatus is provided with a parking brake mechanism so as to maintain braking force generated, even after power supply to said drive source is stopped; and
said brake command is a command to actuate said parking brake mechanism.
